# EUROPEAN PATENT APPLICATION

(11) **EP 2 568 672 A1**
(43) Date of publication of application: **13.03.2013**
(21) Application number: 11178728.9
(22) Date of filing: 24.08.2011
(51) Int. Cl.: H04L 12/70, H04L 12/24, H04L 12/46

(54) **Method for managing network resources within a plurality of datacenters**

(71) Applicant: Alcatel Lucent, 75007 Paris (FR)
(72) Inventor: Pouyllau, Hélia, 91440 Bures-sur-Yvette (FR); Le Sauze, Nicolas, 91440 Bures sur Yvette (FR)
(74) Representative: Lebkiri, Alexandre

(57) **Abstract**

The present invention relates to a method for managing network resources according to physical resources' exploitation within a plurality of data centers, said method comprising setting up network resources, said setting up comprising:
- receiving by a second equipment a first request coming from a first equipment, said first request comprising a number of physical IT resources allocation for a plurality of customer edges;
- sending from said second equipment a first response to said first equipment with a first part of physical IT resources allocated;
- sending from said second equipment a second request to a datacenter for additional physical IT resource(s) until said second request is satisfied;
- sending to a first domain of the first equipment a set message comprising a first set of primitives for a virtual private network to set up said virtual private network;
- setting up a service level agreement between said first domain and at least a second domain according to said primitives;
- identifying network resources that will support the virtual private network and setting up an explicit route object;
- activating the additional physical IT resource(s) and reserving path according to said explicit route object set up; and
- confirming the establishment of the virtual private network to the first equipment.

## Description

### TECHNICAL FIELD

The present invention relates to a method for managing network resources according to physical resources' exploitation within a plurality of data centers. The invention also relates to a multi-domain network system for carrying out said method.

Such a method may be used in any network system supporting a plurality of data centers.

### BACKGROUND OF THE INVENTION

Nowadays, a cloud provider delivers physical resources to its customers within a plurality of datacenters which might be distributed over the world. Said physical resources, which can be virtual machines can be seen by operators as mobile customer edges. Such customer edges may be for example represented by different sites of a firm, different network operators administrating said different sites. One problem for an administrator of these sites is to set up a virtual private network for all of these sites, which thus can be inter-domain (i.e. crossing several networks potentially administrated by different operators) and which supports secured and guaranteed connection paths and cloud computing traffic.

### SUMMARY OF THE INVENTION

It is an object of the invention to provide a method for managing network resources according to physical resources' exploitation within a plurality of data centers, which permits to solve the above problem.

To this end, there is provided a method for managing network resources according to physical IT resources' exploitation within a plurality of datacenters, said method comprising setting up network resources, said setting up comprising :
- receiving by a second equipment a first request coming from a first equipment, said first request comprising a number of physical IT resources allocation for a plurality of customer edges ;
- sending from said second equipment a first response to said first equipment with a first part of physical IT resources allocated ;
- sending from said second equipment a second request to a datacenter for additional physical IT resource(s) until said second request is satisfied ;
- sending to a first domain of the first equipment a set message comprising a first set of primitives for said virtual private network to set up a virtual private network ;
- setting up a service level agreement between said first domain and at least a second domain according to said primitives ;
- identifying network resources that will support the virtual private network and setting up an explicit route object ;
- activating the additional physical IT resource(s) and reserving path according to said explicit route object set up ; and
- confirming the establishment of the virtual private network to the first equipment.

As we will see in further details, the method proposes a protocol to dynamically configure virtual private networks. It permits to coordinate network resources and the physical IT resources.

In a first non-limitative embodiment, said first equipment is:
- a customer edge ;
- a cloud computing manager ; or
- an operations support system.

In a second non-limitative embodiment, said second equipment is a cloud computing manager.

In a third non-limitative embodiment, the set message is sent to an equipment of the first domain which is:
- an operations support system ;
- a network management system;
- a patch computation element.

In a fourth non-limitative embodiment, the first set of primitives comprises:
- a destination identifier of customer edges;
- a given bandwidth ;
- a source identifier of customer edges.

It permits to identify the end-points of the virtual network to be configured and the associated bandwidth.

In a fifth non-limitative embodiment, the first set of primitives (PM1) further comprises:
- a quality of service;
- a bidirectional mode between the customer edges.

In a sixth non-limitative embodiment, the method further comprises updating said network resources, said updating comprising:
- receiving by a fourth equipment from a third equipment a moving request for updating a physical IT resource ;
- relaying a corresponding update request to the domain of another equipment known by the third equipment until it is satisfied, said update request comprising a request for an additional physical IT resource ;
- identifying new network resources that will support the virtual private network and setting up an explicit route object for said additional physical IT resource ;
- activating the additional resource and reserving path according to said explicit route object set up ;
- confirming the establishment of the virtual private network to the third equipment ;
- releasing the additional physical IT resource.

It permits to dynamically reconfigure private network when a virtual machine is moving.

In a seventh non-limitative embodiment, the moving request is received after:
- said additional physical IT resource has been moved from one equipment to another one equipment ; or
- the third equipment has asked for an increase of the bandwidth or an update of a quality of service.

In an eight non-limitative embodiment, the update request comprises a second set of primitives comprising:
- a virtual private network identification;
- a given bandwidth ;
- a set of destination identifiers of customer edges;
- a set of source identifiers of customer edges.

It permits to identify the virtual network to be reconfigured and the end-points of said virtual network and the new associated bandwidth.

In a ninth non-limitative embodiment, the method further comprises a service level agreement renegotiation between the domain of the third equipment and the domain of the another equipment.

In a tenth non-limitative embodiment, the path reservation is performed according to RSVP or LDP protocols.

In addition, there is provided a multi-domain network system for set up network resources according to physical IT resources' exploitation within a plurality of data centers, said network system being adapted to set up network resources and comprising:
- a first equipment adapted to:
- send a first request, said request comprising a number of physical IT resources allocation for a plurality of customer edges ;
- receive a first response with a first part of physical IT resources allocated ;

- said second equipment adapted to :
   - receive a first request, said request comprising a number of physical resources allocation for a plurality of customer edges ;
   - send a first response to said first equipment with a first part of physical IT resources allocated ;send a second request for additional physical IT resource(s) until said second request is satisfied ;
   - send a second request to a datacenter for additional physical IT resource(s) until said second request is satisfied ;
   - send a set message to a first domain of the first equipment to set up a virtual private network, said set message comprising a first set of primitives for said virtual private network;
- said first domain adapted to :
   - set up a service level agreement between said first domain and at least one second domain according to said first set of primitives ;
   - identify network resources that will support the virtual private network and set up an explicit route object ;
   - activate the additional physical resource(s) and reserve path according to said explicit route object set up ; and
   - confirm the establishment of the virtual private network to the first equipment ;
- said datacenter adapted to receive said second request for additional physical IT resource(s) ;
- said at least one second domain.

In a first non-limitative embodiment, said multi-domain network system is further adapted to update network resources and comprising:
- a third equipment adapted to:
   - send a moving request for updating a physical IT resource;
   - relay a corresponding update request to the domain of another equipment known by the third equipment until it is satisfied, said update request comprising a request for an additional physical IT resource ;
- a fourth equipment adapted to:
   - receive said moving request for updating a physical IT resource ;
- an equipment of the domain which has received the set message adapted to:
   - receive said corresponding update request ;
   - identify network resources that will support the virtual private network and set up an explicit route object for said additional physical IT resource ;
   - activate the additional resource and reserve path according to said explicit route object set up ;
   - confirm the establishment of the virtual private network to the first equipment ; and
   - release the additional physical IT resource.

In addition, there is provided a first equipment of a multi-domain network system for performing the method according to any one of the previous characteristics, said first equipment comprising a first processor adapted to:
- send a first request, said request comprising a number of physical IT resources allocation for a plurality of customer edges ;
- receive a first response with a first part of physical IT resources allocated.

In addition, there is provided a first domain of a multi-domain network system for performing the method according to any one of the previous characteristics, said first domain comprising a second processor adapted to:
- set up a service level agreement between said first domain and at least one second domain according to said first set of primitives ;
- identify network resources that will support the virtual private network and set up an explicit route object ;
- activate the additional physical IT resource(s) and reserve path according to said explicit route object set up ; and
- confirm the establishment of the virtual private network to the first equipment.

In addition, there is provided a second equipment of a multi-domain network system for performing the method according to any one of the previous characteristics, said second equipment comprising a third processor adapted to :
- receive a first request, said request comprising a number of physical IT resources allocation for a plurality of customer edges ;
- send a first response to said first equipment with a first part of physical IT resources allocated ;
- send a second request to a datacenter for additional physical IT resource(s) until said second request is satisfied ;
- send a set message to a first domain of the first equipment to set up a virtual private network, said set message comprising a first set of primitives for said virtual private network.

In addition there is provided a third equipment of a multi-domain network system for performing the method according to any one of the previous characteristics, said third equipment comprising a fourth processor adapted to:
- send a moving request for updating a physical IT resource ;
- relay a corresponding update request to the domain of another equipment known by the third equipment until it is satisfied, said update request comprising a request for an additional physical IT resource.

In addition, there is provided a fourth equipment of a multi-domain network system for performing the method according to any one of the characteristics, said fourth equipment comprising a fifth processor adapted to receive said moving request for updating a physical IT resource.

In addition, there is provided an equipment of the domain which has received the set message and of a multi-domain network system for performing the method according to any one of the characteristics, said equipment comprising a sixth processor adapted to:
- receive said corresponding update request ;
- identify network resources that will support the virtual private network and set up an explicit route object for said additional physical IT resource ;
- activate the additional resource and reserve path according to said explicit route object set up ;
- confirm the establishment of the virtual private network to the first equipment ; and
- release the additional physical IT resource.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates a schematic cloud with an inter-domain virtual private network, where the method according to the invention is to be used;
- Fig.2 illustrates a schematic organization chart of the method according to a non-limitative embodiment of the invention, which comprises a setting up step;
- Fig.3 illustrates a schematic organization chart of a non-limitative embodiment of the method of Fig. 2 which further comprises an updating step;
- Fig.4 is a first diagram illustrating in a non-limitative embodiment the setting up step of Fig. 2;
- Fig.5 is a first diagram illustrating in a first non-limitative embodiment the updating step of Fig. 2;
- Fig.6 is a first diagram illustrating in a second non-limitative embodiment the updating step of Fig. 2;
- Fig.7 illustrates a schematic multi-domain network system comprising elements which perform the method of Fig. 2 and Fig. 3; and
- FIG. 8 illustrates schematically the different equipments of the multi-domain system of Fig. 7 which comprise processing unit communicatively coupled to memories for performing the different steps of the method of Fig. 2 and Fig. 3.

### DESCRIPTION OF EMBODIMENTS OF THE INVENTION

In the following description, well-known functions or constructions by the man skilled in the art are not described in detail since they would obscure the invention in unnecessary detail.

The present invention relates to a method for managing network resources according to physical resources' exploitation within a plurality of datacenters.

As will be described hereinafter, the method is a protocol allowing for virtual private network called VPN configuration and reconfiguration composed of some primitives (described later) which :
● set an inter-domain VPN between different source and destination customer edges and for a given end-to-end quality of service called QoS, such as a given bandwidth. These primitives are called by a cloud computing management and executed by an equipment by which the domain to which the datacenter is connected. Applying these primitives leads to the creation of an inter-domain VPN.
● update the elements (end-points, QoS) of an existing VPN identified when a virtual machine VM has moved to a destination.

In non-limitative examples, an end-to-end QoS may be the bandwidth, or the end-to-end delay (the delay from a source customer edge to a destination customer edge).

It is to be noted that the term physical resources or physical IT (Information Technology) resources or IT resources will be used interchangeably in the following description. In non-limitative examples, said IT resources are virtual machines represented by their CPU, memory capacity etc.

It is to be noted that the term network resources represent for example the bandwidth.

It is to be noted that the term domain or network will be used interchangeably.

It is to be noted that, the term end-point represents a customer edge of the client of an operator or the customer edge of a datacenter.

The network resources are the resources available on routers of a domain, for example the bandwidth capacity of a router, the physical ports etc.

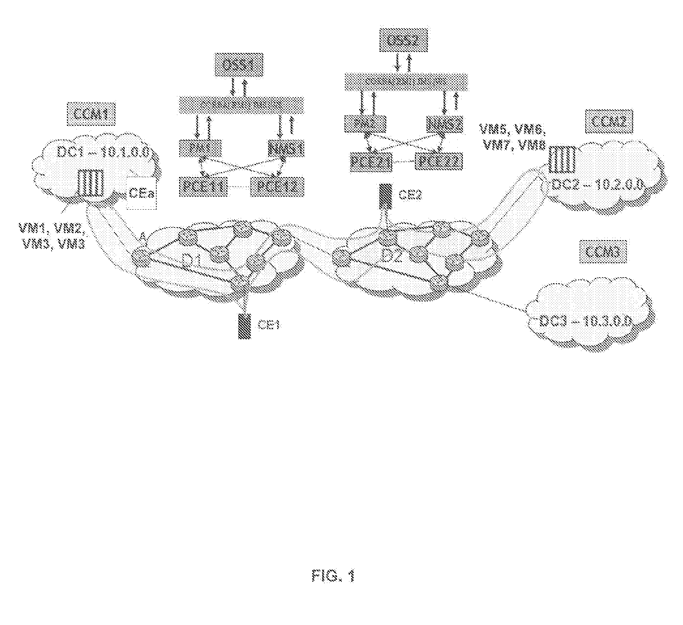

Fig. 1 provides a non-limitative example of a multi-domain network system NTW administrated by independent management systems also called Cloud with an inter-domain VPN, which is composed of:
- two domains D1 and D2 managed by independent management system such as an OSS-NMS-PCE architecture. Of course, in other non-limitative embodiments, other architectures with Open API service or OAS may be used? Interfaces between OSS and NMS are also illustrated such as in non-limitative examples CORBA, RMI, JMS, WS ;
- three datacenters DC1, DC2 and DC3 managed by cloud computing managers CCMs forming the Cloud ;
- two customer edges CE1, CE2 which are both end points of a business entity accessing the Cloud service provided by eight virtual machines VM1 to VM8.

It is to be noted that one or a plurality of datacenters may be managed by one cloud computing provider, therefore by one CCM. One datacenter is connected to a domain via a router and via a connection point CE. In the example of Fig. 1, the datacenter DC1 is connected to the domain D1 via the router A and the connection point CEa.

It is to be noted that one or a plurality of domains (also called networks) may be managed by one operator also called network provider.

A customer (for example a firm) is connected via a customer edge (CE1, CE2) which are connected to a domain (D1, D2 respectively).

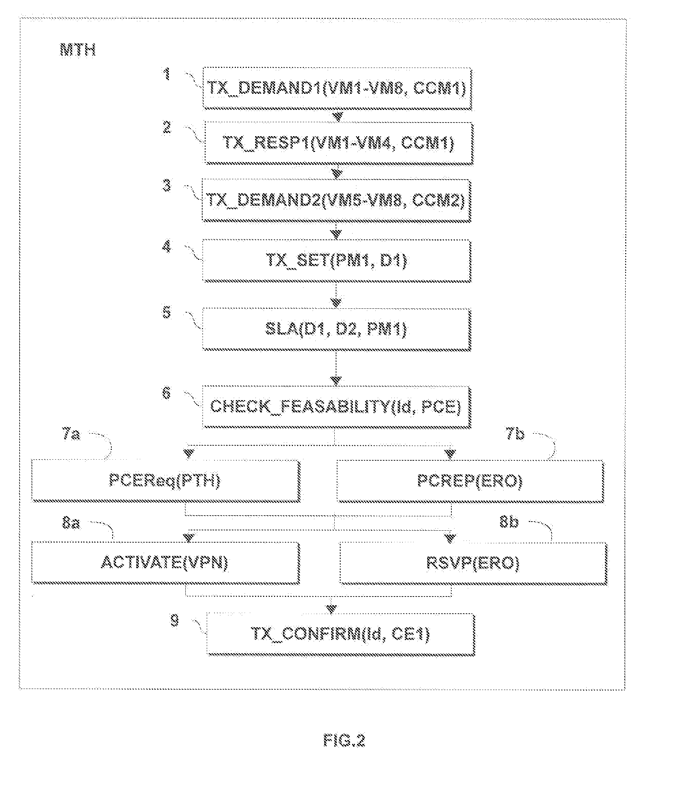

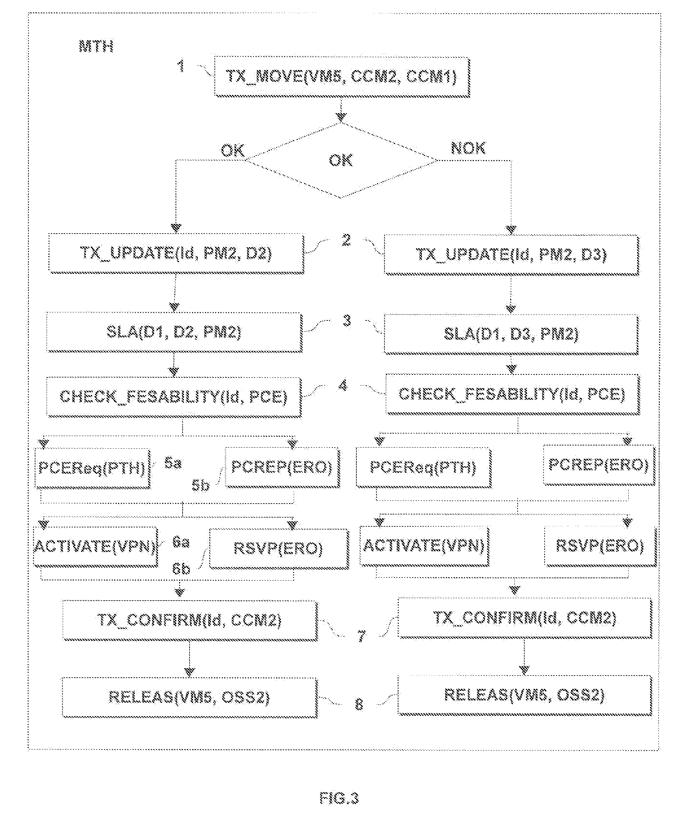

The method MTH for managing network resources RR according to physical resources' exploitation VM within a plurality of data centers DC, said method comprising setting up network resources is described in detail as illustrated in Fig. 2 and Fig. 3.

Said setting up comprises:
- receiving by a second equipment EQ2 a first request DEMAND1 coming from a first equipment EQ1, said first request DEMAND1 comprising a number of physical IT resources allocation VM1-VM8 for a plurality of customer edges CE (step TX_DEMAND1(VM1-VM8, CCM1) as illustrated in Fig. 2) ;
- sending from said second equipment EQ2 a first response RESP1 to said first equipment EQ1 with a first part of physical IT resources allocated VM1-VM4 ( TX_RESP1(VM1-VM4, CCM1) as illustrated in Fig. 2) ;
- sending from said second equipment EQ2 a second request DEMAND2 to a datacenter DC2 for additional physical IT resource(s) VM5-VM8 until said second request DEMAND2 is satisfied (TX_DEMAND2(VM5-VM8, CCM2) as illustrated in Fig. 2) ;
- sending to a first domain D of the first equipment EQ1 a set message SET comprising a first set of primitives PM1 for said virtual private network VPN to set up a virtual private network VPN (TX_SET(PM1, D1) as illustrated in Fig. 2) ;
- setting up a service level agreement SLA between said first domain D1 and at least a second domain D2 according to said first set of primitives PM1 (SLA(D1, D2, PM1) as illustrated in Fig. 2) ;
- identification of network resources that will support the VPN and setting up an explicit route object ERO (PCEReq(PTH), PCEREP(ERO)) as illustrated in Fig. 2);
- activating the additional physical IT resource(s) VM5-VM8 and reserving path according to said explicit route object set up ERO (ACTIVATE(VPN), RSVP(ERO) as illustrated in Fig. 2) ; and

● confirming the establishment of the virtual private network VPN to the first equipment EQ1 (TX_CONFIRM(Id, CE1) as illustrated in Fig. 2).

In a non-limitative embodiment as illustrated in Fig. 2, the method further comprises checking the feasibility of a connection between the pluralities of customer edges CE based on the SLA negotiation (CHECK_FEASABILITY(Id,PCE)).

In a non-limitative embodiment as illustrated in Fig. 3, the method further comprises updating said network resources RR, said updating comprising:
- receiving by a fourth equipment EQ4 from a third equipment EQ3 a fourth request MOVE for updating a physical resource VM5 (TX_MOVE (VM5, CCM2, CCM1) ;
- relaying a corresponding update request UPDATE to the domain D of another equipment EQb known by the third equipment EQ3 until it is satisfied, said update request UPDATE comprising a request for an additional physical resource VM (TX_UPDATE(ld, PM2, D)) ;
- identifying new network resources that will support the virtual private network VPN and setting up an explicit route object ERO for said additional physical resource VM (PCEReq(PTH), PCEREP(ERO)) ;
- activating of the additional resource and reserving path according to said explicit route object set up ERO (ACTIVATE(VPN), RSVP(ERO))
- confirming the establishment of the virtual private network VPN to the third equipment EQ3 (TX_CONFIRM(Id, CCM2) ;
- releasing the additional physical resource VM (RELEAS(VM5,CCM2)).

In a non-limitative embodiment as illustrated in Fig. 3, the method further comprises checking the feasibility of a connection between the pluralities of customer edges CE based on the SLA negotiation (CHECK_FEASABILITY(Id, PCE)).

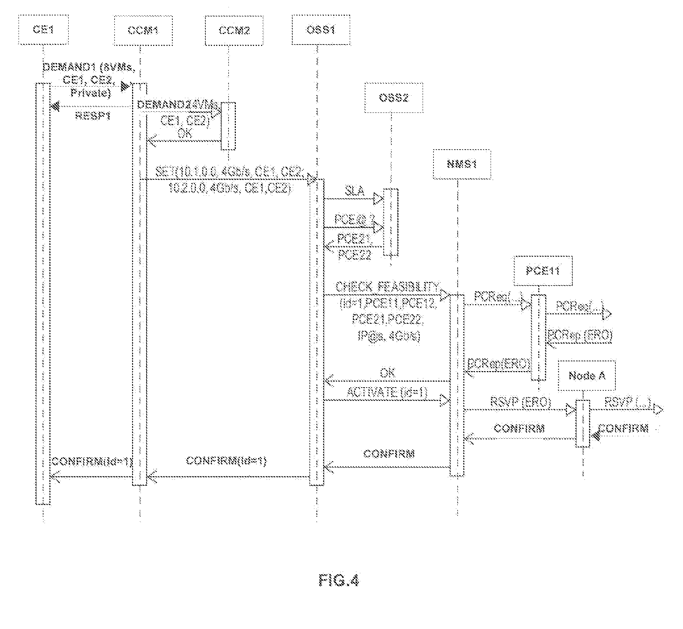

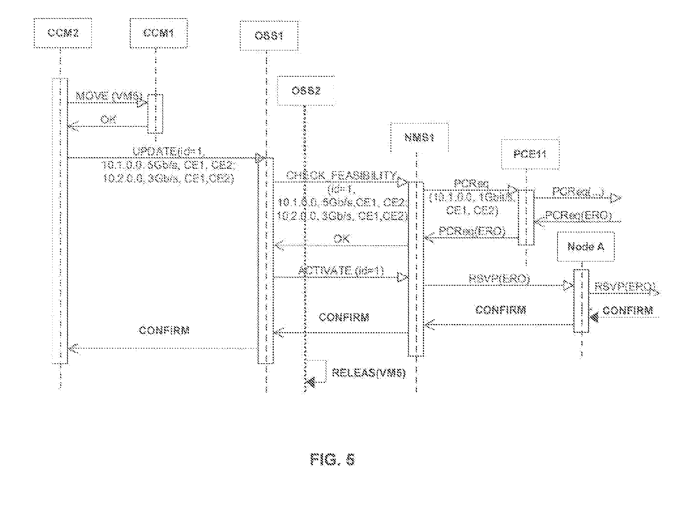

The managing method MTH is described in details below. In particular, the setting up step is described in a non-limitative embodiment in Fig. 4, and the update step is described in a non-limitative embodiment in Fig. 5. They comprise the non-limitative further steps above-mentioned.

### ●Setting up step.

This non-limitative embodiment illustrates the process triggered by a new customer demand. In the non-limitative example illustrated, the customer represented by CE1 demands a secured access to a plurality of VMs for CE1 and CE2 to the first cloud computing manager CCM1. It is to be noted that the CCM1 is here distributed.

It is to be noted that the term "distributed" means that different CCM belonging or not to a same operator are independently managing different datacenters.

It is to be noted that the customer demand could also be represented by a computing or storage capacity. For simplification purpose, on assumes the customer wants a given number of VMs for an unlimited period of time.

**In a first step 1)**, as illustrated in Fig. 4, the second equipment EQ2, here CCM1, receives a first request DEMAND1 coming from a first equipment EQ1, here CE1, said first request DEMAND1 comprising a number of physical resources allocation VM1-VM8 for a plurality of customer edges CE, here CE1 and CE2.

In the non-limitative example illustrated, eight VMs (VM1 to VM8) are requested and the second equipment is the first cloud computing manger CCM1 whereas the first equipment is the first customer edge CE1.

It is to be noted that CE1 knows only CCM1. As the datacenters are distributed, CCM1 asks the other CCM responsible of the different datacenters for the required VM, and upon their answer, will send a set message SET.

In other non-limitative embodiments, the first equipment EQ1 is:
- a cloud computing manager CCM ;
- an operations support system OSS.

It is to be noted that an OSS manages network resources, whereas a CCM manages IT resources. Datacenters comprise network resources and IT resources.

The second equipment CCM1 identifies that within the first datacenter DC1, four VMs can be provisioned.

Therefore, **in a second step 2)**, a first response RESP1 is sent to said second equipment EQ2, here CCM1, with a first part of physical resources allocated, here the first four VMs VM1 to VM4.

In the non-limitative example illustrated, said response is sent to the first equipment CE1 by the second equipment CCM1.

**In a third step 3)**, a second request DEMAND2 is sent for additional physical resource(s) VM5-VM8 until said second request DEMAND2 is satisfied.

It is to be noted that OSS-NMS-PCE are the equipments which manages a network/domain D.

In the non-limitative example illustrated, the second equipment CCM1 sends the second request DEMAND2 to the second datacenter D2 and more particularly to the cloud computing manager CCM2 of said second datacenter DC2. It asks to CCM2 if four VMs, here VM5-VM8, can be provisioned in the second datacenter DC2. If the second datacenter DC2 confirms that it has the additional VMs, the fourth step is performed.

Said second datacenter DC2 satisfies the request (OK illustrated in Fig. 4). If not, the second request is sent to another CCM of another datacenter until the request DEMAND2 is satisfied. Said another datacenter DC is either known from the operator managing the datacenter DC1 or known from another operator who have given his agreement for an access to his cloud computing manager by the other operator.

Thanks to the positive answer of the datacenter DC2, one knows that some VM of DC2 will be part of the VPN that will be set up as explained below.

Hence, after the identification of the available IT resources (in the not limited example the VMs), one identifies the available network resources.

As one knows which datacenters comprise the available VMs, one now knows to which datacenters one can ask for the network resources: the datacenters comprising said available VMs as following.

**In a fourth step 4)**, as illustrated in Fig. 4, a set message SET is sent to a first domain D1 of the first equipment EQ1, here CE1, comprising a first set of primitives PM1 for said virtual private network VPN to set up a virtual private network VPN.

In a non-limitative embodiment, the set message SET is sent to an equipment EQa of the first domain D1, which is:
- an operations support system OSS ;
- a network management system NMS;
- a path computation element PCE.

In non-limitative embodiments, the first set of primitives PM1 comprises:
- a destination identifier IP_ADDd of customer edges CE;
- a given bandwidth BDW1 ;
- a source identifier IP_ADDs of customer edges CE.

In the non-limitative example illustrated, 4Gb/s are required for the bandwidth BDW1 between the first customer edge CE1 and the second customer edge CE2.

In a non-limitative embodiment, a destination/source identifier is a set of IP addresses.

In a non-limitative embodiment, the first set of primitives PM1 further comprises:
- a quality of service QoS;
- a bidirectional mode between the customer edges CE (the value of the bandwidth is required in both directions).

Hence, upon confirmation of DC2, CCM1 identifies that 4Gb/s are required for the VPN and asks for its establishment to the first domain D1, and more particularly to the manager of the access point of DC1 connected to the domain D1.

In the non-limitative example illustrated, CCM1 asks more particular the OSS of the network of the first customer edge CE1. It is to be noted that the decision is distributed among OSSs. It means that each manager of a domain (or network), here each OSS, will tell if it can support a part of the network resources, i.e. of the required bandwidth.

Hence, applying these primitives will lead to the creation of an inter-domain VPN as follows:
- the OSS/OAS of the domain D1 source of the demand (of the 8Gb/s) will negotiate service level agreement SLA according to well-known negotiation method allowing selecting an SLA according to cost benefit objectives, such as the price of the SLA.
- Network resources will be identified (path computation process) and reserved.

**In a fifth step 5)**, as illustrated in Fig. 4, a service level agreement SLA between said first domain D1 and at least a second domain D2 according to said first set of primitives PM1 is set up.

Hence, the OSS1 of the first domain D1 establish a SLA with the OSS2 of the second domain D2 which agrees and gives the list of the Path Computation Element PCEs that should be used for the VPN path computation, which in the non-limitative example are PCE21 and PCE22.

It is to be noted that of course, there is a local SLA within the first domain D1 which establish the list of the PCEs within said domain to be used.

After said SLA negotiation, **In a sixth step 6)**, the method further comprises a step of checking the feasibility of a connection between the plurality of customer edges CE, here CE1 and CE2.

In a non-limitative example illustrated, a message CHECK_FEASABILITY is sent comprising the abovementioned parameters:
- the VPN identifier = 1 ;
- the sequence is PCE11-PCE12-PCE21-PCE22 ;
- the IP addresses of CE1, CE2 :
- the demanded bandwidth capacity 4Gb/s.

It is to be noted that the same parameters applied for an OAS architecture.

This checking may be performed independently by each domain or from end-to-end with the PCE architecture for the two cases.

If the connection is feasible, the following step is performed, otherwise the demanded bandwidth is reduced and the preceding steps are performed based on the new reduced value.

**In a seventh step 7)**, as illustrated in Fig. 4, identification of network resources that will support the VPN (step 7a) and setting up an explicit route object ERO (step 7b) are performed.

Identification of network resources is performed by path computation via the OSS architecture. Hence, in the non-limitative example illustrated of the OSS-NMS-PCE architecture, the first NMS1 of the first domain D1 launches a PCE request on the given sequence of PCEs. The PCE find a path and give an external Route Object ERO as answer, so that NMS1 confirms that the provisioning of network resources has succeeded.

In a non-limitative embodiment, the protocol to compute intra-domain paths (PCE11-PCE12 and PCE21-PCE22) and inter-domain paths (PCE21-PCE22) under bandwidth constraints: the PCE proposed by the IETF RFC 5440 and 5441 is used.

It is to be noted that the PCE has to determine a multipoint-to-multipoint path for the VPN set-up. This can be achieved by many point-to-point path computations.

In a non-limitative embodiment, the path computation can be performed by NMSs of each domain, thus demanding coordination between OSSs to compile the resulting end-to-end path. Any other systems could also be used.

**In an eight step 8)**, as illustrated in Fig. 4, activation of the additional physical IT resource(s) VM5-VM8 (step 8a) and reserving path according to said explicit route object set up ERO (step 8b) are performed.

Hence, in the non-limitative example of the OSS-NMS-PCE architecture illustrated, the first OSS1 of the first domain D1 asks for the activation of the path. Hence, the first NMS1 asks for the first node of the path found, illustrated A as shown in Fig. 1, to reserve the ERO given by the PCEs in step 6.

Hence, in the OSS-NMS-PCE architecture, the first OSS1 asks the NMS of its domain D1, the first NMS1 to provision a VPN indicating the following parameters:
- a VPN identifier;
- the sequence of PCEs to use.
- the identifiers of the source/destination customer edge. In the non-limitative example illustrated, the IP addresses of CE1, CE2 :
- the demanded QoS. In the non-limitative example, the demanded capacity 4Gb/s.

It is to be noted that the same applied for an OAS architecture.

The term provisioning means that the routers within the first domain D1 will enforce the computed VPN and its characteristics: the resources identified on each router will be activated and reserved using a protocol such as LDP or RSVP so as the demanded bandwidth or other VPN requirements are enforced.

In non-limitative examples, the path reservation is performed according to RSVP or LDP protocols. Such protocols are well-known by the man skilled din the art and therefore won't be described here.

It is to be noted that the activation and path reservation of the network resources within a datacenter can be performed by the CCM in the same manner. Furthermore, IT resources are provisioned as well by the local system of the datacenter, from a demand of the CCM.

**In a ninth step 9)**, as illustrated in Fig. 4, establishment's confirmation of the virtual private network VPN to the first equipment EQ1, here CE1, is performed.

Hence, the confirmation of the establishment is backwardly forwarded to the customer, i.e. to the first CE1, with the VPN identifier.

In the non-limitative illustrated, a confirmation message is sent from the node A to the first CE1 via the OSS-NMS-PCE elements which has established the VPN.

It is to be noted that in the non-limitative example illustrated, the features ensured by the PCEs could be ensured by the NMS and the OSS with more messages (requests) exchange and level abstractions. It is to be noted that the PCE architecture allowed to compute paths according to the network resources, whereas NMSs can communicates with each other and OSSs are working at higher level. The messages exchanged between the OSS and the NMS are inspired by the MTOSI framework defined by the Telemanagement Forum. SNMP, netconf protocols between the NMSs and the network equipments (i.e. the routers) may be used.

### ●Updating step.

As described hereinafter, the update step is performed by means of an update request UPDATE which updates the elements (end-points, bandwidth) of an existing VPN identified with a parameter ld.

The updating step is triggered by:
- the move of a VM in another datacenter:
   o a) the other datacenter is already involved in the current VPN (the one which has been created previously) ;
   o b) the other datacenter is new, i.e. is not already involved in the current VPN.
      ■i) but the other datacenter belongs to a domain already involved in the VPN (via another datacenter)
      ■ii) but the other datacenter belongs to a domain not already involved in the VPN (via another datacenter)
   o c) the datacenter is not indicated. The domain in charge of the VPN is in charge of finding a datacenter to support the IT resource (VM).

It is to be noted that a move of a virtual machine may be demanded for maintenance reasons or when IT resources are to be migrated within a datacenter or when a IT resource has been released.

### o Move of a VM in another datacenter

The two following embodiments associated with a demand of VPN update are given, both occurring when a VM moves are given to illustrate this case..

In the first embodiment a), the end-points of the VPN are not affected.

As will be described hereinafter, both CCM2 and CCM1 agree on the move of VM5, so that DC1 will now support VM5 (DC2 could not support any more this resource). As a consequence, in a non-limitative embodiment, the CCM2 will signal that a reconfiguration of the current VPN is required (more bandwidth is needed for DC1) sending an update message to OSS1.

In the second embodiment b), the move leads to the creation of a new end-point (a new datacenter).

As will be described hereinafter, both CCM2 and CCM3 agree on the move of VM5, so that DC3 will now support VM5 (as DC1 can't support VM5 and DC2 could not support any more this resource). As a consequence, in a non-limitative embodiment, the CCM2 will signal that a reconfiguration of the current VPN is required (a bandwidth is needed for DC3) sending an update message to OSS1 responsible of the connection, i.e. which has set up the VPN (which has received the SET message).

It is to be noted that this supposes that CCM2 have all the information (required bandwidth, CE identifiers etc.) about the VPN, so a posteriori to the setting up step above mentioned, a synchronization is realized among all the CCMs of the domains involved in the VPN (i.e. CCM1 has given these information to CCM2).

Of course, in another non-limitative embodiment, if CCM2 has not access to all these information about the VPN, it can ask directly CCM1 to send the update message.

### ■a) First embodiment as illustrated in Fig. 5 : datacenter already involved in a VPN

This first embodiment illustrates the case where a datacenter, called source datacenter, here DC2, announces that a VM, here VM5 will move to another one, called destination datacenter, here DC1 that is already involved in the identified VPN.

The announcement is performed to the CCM of the domain D which has set up the identified VPN, here CCM1.

As described in detail hereinafter, the domain receiving the update demand checks locally the feasibility of increasing the bandwidth and/or transmits the requests through the PCE architecture. If all the networks (domains) can support the increase of the bandwidth, IT resources are committed and the VPN is thus reconfigured.

In the non-limitative example illustrated, the datacenter DC1 will have now to support 5Gb/s instead of 4Gb/s currently supported, whereas the datacenter DC2 will provide only 3 Gb/s instead of 4Gb/s currently supported.

**In a first step 1)**, as illustrated in Fig. 5, a moving request MOVE for updating physical resource VM is received by a fourth equipment EQ4 from a third equipment EQ3.

In this embodiment, the third equipment EQ3 is the CCM of the source datacenter which is here in the non-limitative example illustrated DC2 and the fourth equipment EQ4 is the CCM of the destination datacenter which is here in the non-limitative example illustrated DC1, Hence, the cloud computing managers CCM1 and CCM2 of the two datacenters DC1 and DC2 agree on the move of VM5 so that the datacenter DC1 will now support VM5. Hence, the moving request MOVE is received after:
- said additional physical resource VM5 is not available any more for the demand; or
- an update demand of a customer for a QoS or any other VPN attribute; for example demanding more bandwidth, a higher level of security for the VPN, etc. Here, the first equipment CE1 has asked for an increase of the bandwidth in a not limited example.

Upon confirmation by CCM1 that it can support the new VM, **in a second step 2)**, as illustrated in Fig. 5, a corresponding update request UPDATE is relayed to the domain D of another equipment EQb known by the third equipment EQ3 until it is satisfied, said update request UPDATE comprising a request for an additional physical resource VM. Said update means that a reconfiguration of an identified VPN is required (more bandwidth is needed to DC1).

In non-limitative embodiment, the update request UPDATE comprises the following second set of primitives PM2:
- a virtual private network identification ld, which indicates which VPN is concerned by the update ;
- a given bandwidth BWD2, which indicates the new bandwidth asked;
- a set of destination identifiers of customer edges CE, such as in non-limitative example IP addresses, which identify the end-point of the VPN ;
- a set of source identifiers of customer edges CE, such as in non-limitative example IP addresses, which identify the entry point of the VPN.

In a non-limitative embodiment, the update request UPDATE further comprises the identifier of the datacenters involved in the VPN and which will be involved in the VPN, here DC1 and DC2.

Hence, in the non-limitative example illustrated in the Fig. 5, the other equipment EQb is OSS1, the other domain the first domain D1, the third equipment is the second CCM2 and the additional physical resource the VM5. The corresponding update request UPDATE is then composed as follows : UPDATE(ld = 1; 10.1.0.0, 5Gb/s, @CE1, @CE2; 10.2.0.0, 3Gb/s, @CE1, @CE2).

Now that only 3 Gb/s are available on the second datacenter DC2 as said datacenter now have only three VM available, VM6, VM7 and VM8 (DC2 which address is 10.2.0.0), 5Gb/s are now demanded for the VPN number 1 on the first datacenter DC1 (which address is 10.1.0.0) from the customer edge CE1 to the customer edge CE2, whereas 3 Gb/s are now demanded for the VPN number 1 on the second datacenter DC2 from the customer edge CE1 to the customer edge CE2.

The additional resource (1 VM that means 1 Gb/s) is therefore required on the first datacenter DC1.

After this second step, the steps 5 to 8 described before for the setting up step are performed in order to perform SLA agreement between the domains D1 and D2. Check feasibility, virtual private network path computation and setting up an explicit route object ERO, activation of the physical IT resource(s) VM5 and path reservation according to said explicit route object set up ERO are performed.

**In a seventh step 7)**, as illustrated in Fig. 5, establishment's confirmation of the virtual private network VPN to the third equipment EQ3 is performed, i.e. in the non-limitative example illustrated CCM2.

Hence, the confirmation of the establishment is backwardly forwarded to the customer, i.e. to the first CE1, with the VPN identifier.

In the non-limitative example illustrated, a confirmation message is sent from the node A to the third equipment CCM2 via the OSS-NMS-PCE elements which has previously established the VPN during the setting up step.

It is a confirmation of the VPN reconfiguration.

**In an eight step 8)**, as illustrated in Fig. 5, the additional physical resource VM, here VM5, is released.

The released is performed by the manager of the domain from which the network resources is moved, here the release of 1 Gb/s is performed by OSS2 of the domain which loses 1 Gb/s. NMS2 will inform the router concerned by the release.

The VM5 can now move to the datacenter DC1: 1) the VM file is copied from the datacenter DC2 to the datacenter DC1, 2) it is activated on DC1 with its identifier address so that service continuity is ensured, 3) it is then deactivated and removed from DC2.

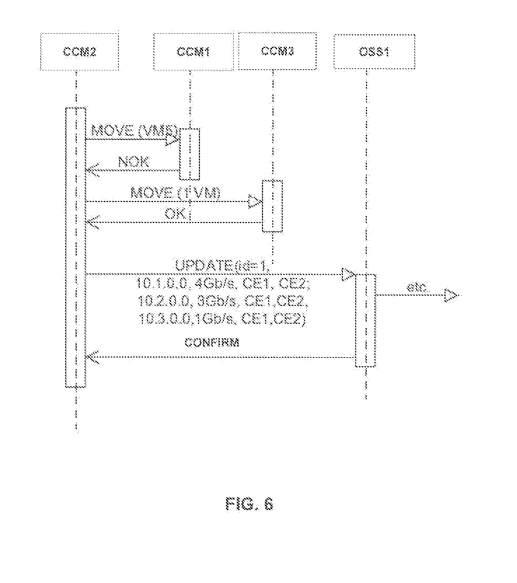

### ■ b) Second embodiment as illustrated in Fig. 6 : datacenter not already involved in the VPN

This second embodiment illustrates the case where a datacenter, called source datacenter, here DC2, announces that a VM, here VM5 will move to another one, called destination datacenter, here DC3 that is not involved in the current VPN.

The announcement is performed to the CCM of the domain D which has set up the identified VPN, here CCM1.

In the non-limitative example illustrated, the datacenter DC1 will have to support 4Gb/s as currently supported, the datacenter DC3 will have now to support 1 Gb/s instead of 0 currently supported, whereas the datacenter DC2 will provide only 3 Gb/s instead of 4Gb/s currently supported.

In the non-limitative example illustrated, CCM1 could not support the new VM and has replied accordingly to CCM1.

**In a first step 1)**, as illustrated in Fig. 6, a moving request MOVE for updating physical resource VM5 is received by a fourth equipment EQ4, here CCM3, from a third equipment EQ3, here, CCM2.

This step is the same as the one previously described for the setting up step.

On confirmation by CCM3 that it can support the new VM, **in a second step 2)**, as illustrated in Fig. 6, a corresponding update request UPDATE is relayed to the domain D of another equipment EQb known by the third equipment EQ3 until it is satisfied, said update request UPDATE comprising a request for an additional physical resource VM.

In non-limitative embodiment, the update request UPDATE comprises the same data as previously mentioned in the second step of the setting up step.

In a non-limitative embodiment, the update request UPDATE further comprises the identifier of the datacenters involved in the VPN and which will be involved in the VPN, here DC1, DC2 and DC3.

Hence, in the non-limitative example illustrated in the Fig. 6, the other equipment EQb is the first CCM1, the other domain the first domain D1, the third equipment is the second CCM2 and the additional physical resource the VM5. The corresponding update request UPDATE is then composed as follows : UPDATE(ld = 1; 10.1.0.0, 5Gb/s, @CE1, @CE2; 10.2.0.0, 3Gb/s, @CE1, @CE2; 10.3.00, 1Gb/s, CE1, CE2).

Hence, now that only 3 Gb/s are available on the second datacenter DC2 as said datacenter now have only three VM available, VM6, VM7 and VM8 (DC2 which address is 10.2.0.0), 4Gb/s are always demanded for the VPN number 1 on the first datacenter DC1 (which address is 10.1.0.0) from the customer edge CE1 to the customer edge CE2, whereas 1 Gb/s are now demanded for the VPN number 1 on the third datacenter DC3 (which address is 10.3.0.0) from the customer edge CE1 to the customer edge CE2.

The additional resource (1 VM that means 1 Gb/s) is therefore required on the third datacenter DC3.

Then the steps 3 to 7 previously described for the first embodiment are performed accordingly with the datacenter DC3 as the new datacenter which will provide the new VM, here VM5. It is to be noted that the corresponding update request UPDATE is relayed to the domain D of another equipment EQb which is responsible of the connection (the other equipment EQb known by the third equipment EQ3, here CCM2). Such other equipment EQb is in the non-limitative example OSS1.

These steps described for the second embodiment applied in the cases as mentioned above where:
■i) the new CE (datacenter) is operated by an operator (or carrier) which operates a portion of the VPN (via another datacenter) and therefore belongs to a domain already involved in the VPN (via another datacenter)
■ii) the new CE (datacenter) is operated by another operator and therefore belongs to a domain not already involved in the VPN (via another datacenter). For this latter case ii), it is required, so as in the SET step, to know the sequence of PCEs of the new domain, to compute a new path etc. More particularly, the updating step therefore further comprises:
   - a checking to see if the new operator domain, here D3, is connected or reachable through one of the VPN operators' domain, operator who is responsible of the creation of the VPN. The checking is performed by the manager of the domain responsible of the VPN, here by OSS1. The question is to see if OSS1 knows about OSS3. If yes, OSS1 contacts OSS3 to see if its domain can support VM5.
   - a service level agreement renegotiation between the new domain D and the domain responsible of the connection. Hence, in the non-limitative example illustrated, a SLA renegotiation will be performed between domain D3 and domain D2.
   - an internally checking (within domain D3 by OSS3-NMS3-PCE3) if IT resources may be provisioned to support the new path (the check feasibility step above described).
   - A set message SET(CE2, CE3, 1Gb/s) is sent from domain D2 (by means of OSS2 or CCM2 for example) to domain D3 (OSS3 receives the set message SET) so as to create a portion of the VPN.

Said further sub-steps may be executed before the path computation or after (but before the establishment confirmation).

### ■c) Datacenter not indicated

The CCM asks for an update but does not impose any destination. Hence, the OSS/OAS receiving the request will have to negotiate with other CCMs (eventually they could be precise by the demanding CCM) to find a localization for the VM. Accordingly, the OSS/OAS might have to contact other carriers' domain via their OSS to support the new localization. If this process appears to be more complicate, it could be advantageous for both Cloud and Network Providers since optimized paths can be found (for example it could be better to have four VMs on DC1 and five VMs on DC2 than four VMs on DC1 and four VMs on DC2). The stage of this scenario are quite similar to the 2nd scenario (2b) except that the candidate network domain must be one to which a datacenter is connected. Furthermore, the OSS/OAS of these domains has to check together with the CCM systems of the datacenter they are connected to if IT resources are sufficient.

It is to be noted that one VM which moves has been taken in a non-limitative example. If several VMs are moving, it could also lead to the suppression of existing end-points (datacenter) involved the VPN. This case is also covered by the process described above for the setting up step and for the updating step.

For all the embodiments described above, in non-limitative embodiments, the set message SET and the update message UPDATE previously described may be supported by different protocols such as:
- using dedicated HTTP primitives ;
- using HTTP primitives : the REST architecture recommends using HTTP primitives for web services. Hence, the UPDATE and SET message may be a service associated to a PU or a POST. This solution may be preferred for an inclusion in an Open API;
- using a SOAP: SOAP messages running on HTTP could transport an update message UPDATE and a set message SET as web services. As for the REST solution, a SAOP-base solution is a candidate for an Open API; and
- using a dedicated protocol.

In any case, the update messages UPDATE and set messages SET operate at a high level of network architecture, thus, it would be supported by layer 5 protocols, i.e. HTTP.

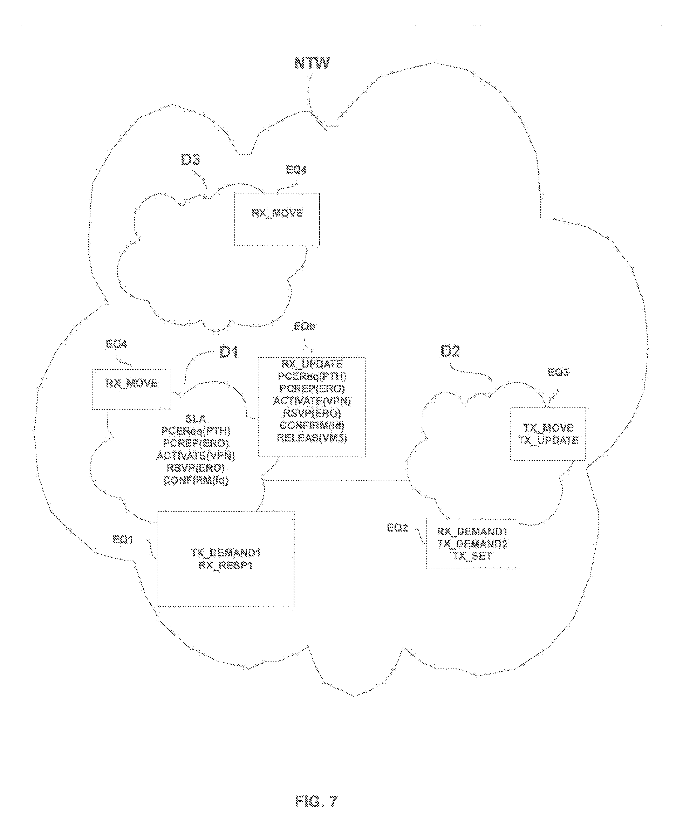

As illustrated in Fig.7, in a non-limitative embodiment, a multi-domain network system NTW for set up network resources RR according to physical resources' exploitation VM into a plurality of data centers DC, said network system being adapted to set up network resources, is able to carry out the method MTH above described. It is to be noted that for simplicity some functions have been illustrated in this figures without their parameters, but they are the same as those represented in the preceding figures 2 to 6. For example TX_UPDATE represents the same function than TX_UPDATE(Id, PM, D), or SLA represents the same function than SLA(D1, D2, PM2) or SLA(D1, D3, PM2). The term RX illustrates the reception of a date, such as RX_UPDATE illustrates the reception of the update message UPDATE, whereas the term TX illustrates the transmission of a data.

Therefore, in a non-limitative embodiment, said multi-domain network system NTW comprises:
- a first equipment EQ1 adapted to :
   - send a first request DEMAND1, said request comprising a number of IT physical resources allocation VM1-VM8 for a plurality of customer edges CE ;
   - receive a first response RESP1 with a first part of physical IT resources allocated VM1-VM4 ;
- said second equipment EQ2 adapted to :
   - receive a first request DEMAND1, said request comprising a number of physical IT resources allocation VM1-VM8 for a plurality of customer edges CE ;
   - send a first response RESP1 to said first equipment EQ1 with a first part of physical IT resources allocated VM1-VM4 ;
   - sending a second request DEMAND2 to a datacenter DC2 for additional physical IT resource(s) VM5-VM8 until said second request DEMAND2 is satisfied ;
   - send a set message SET to a first domain D1 of the first equipment EQ1 to set up a virtual private network VPN, said set message SET comprising a first set of primitives PM1 for said virtual private network VPN;
- said first domain D1 adapted to :
   - set up a service level agreement SLA between said first domain D1 and at least one second domain D2 according to said first set of primitives PM1 ;
   - identify network resources that will support the virtual private network VPN and set up an explicit route object ERO ;
   - activate the additional physical resource(s) VM5-VM8 and reserve path according to said explicit route object set up ERO ; and
   - confirm the establishment of the virtual private network VPN to the first equipment EQ1 ;
- said datacenter DC2 adapted to receive said second request DEMAND2 for additional physical IT resource(s) VM5-VM8 ;
- said at least one second domain D2.

In a non-limitative embodiment, said network system NTW is further adapted to update network resources and comprises:
- a third equipment EQ3 adapted to:
   - send a moving request MOVE for updating a physical IT resource VM5;
   - relaying a corresponding update request UPDATE to the domain D1 of another equipment EQb known by the third equipment EQ3 until it is satisfied, said update request UPDATE comprising a request for an additional physical IT resource VM ;
- a fourth equipment EQ4 adapted to:
   - receive said moving request MOVE for updating a physical IT resource VM ;
- an equipment EQb of the domain which has received the set message SET adapted to:
   - receive said corresponding update request UPDATE ;
   - identify network resources that will support the virtual private network VPN and set up an explicit route object ERO for said additional physical IT resource VM ;
   - activate the additional resource and reserve path according to said explicit route object set up ERO ;
- confirm the establishment of the virtual private network VPN to the first equipment EQ1 ;
- release the additional physical IT resource VM.

It is to be noted that as illustrated in the examples of Fig. 1 to Fig. 6 EQ2 is equal to EQ4 which corresponds to CCM1, whereas EQ1 corresponds to CE1, EQb to OSS1 and EQ3 to CCM2 or to CCM3.

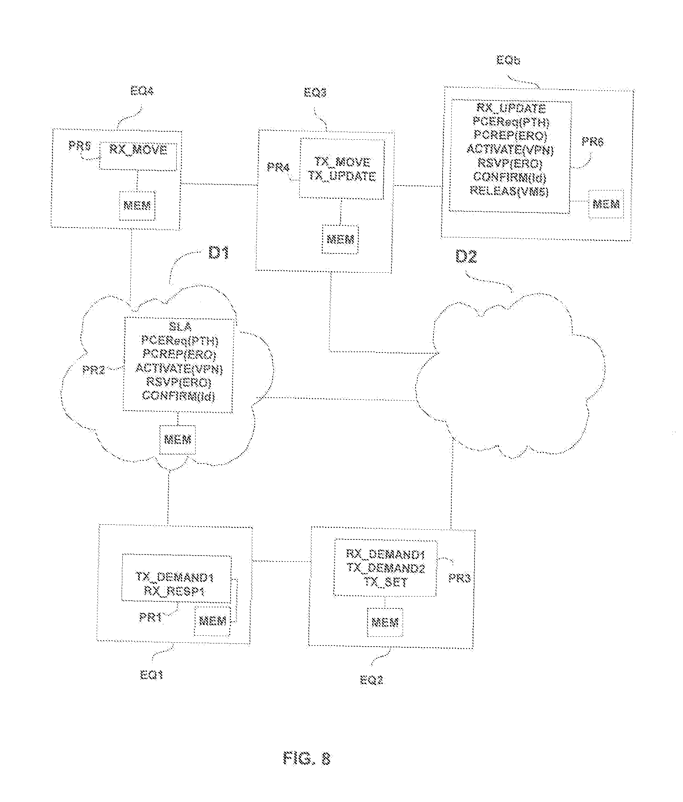

As illustrated in Fig. 8, the different equipments mentioned above each comprises a processor PR communicatively coupled to a memory MEM, said processor being programmed to perform some steps of the method as previously described. For the sake of clarity, the belonging or communication of an equipment to or with a domain D has been illustrated with a link between said equipment and said domain. The same apply for communications between two equipments.

The first equipment EQ1 comprises a first processor PR1.

The first domain D1 comprises a second processor PR2.

The second equipment EQ2 comprises a third processor PR3.

The third equipment EQ3 comprises a fourth processor PR4.

The fourth equipment EQ4 comprises a fifth processor PR5.

The equipment EQb comprises a sixth processor PR6.

Note that some of these processors may be the same as for example EQ2 is equal to EQ4 in the not limited example described before.

The functions of the various elements shown in the Fig. 8, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is to be understood that the present invention is not limited to the aforementioned embodiments and variations and modifications may be made without departing from the scope of the invention. In the respect, the following remarks are made.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It is to be understood that the present invention is not limited to the aforementioned application.

The invention may be applied within a carrier network or within a trusted alliance between carriers using their own network management elements NME.

However, standardization is required when it comes to the interoperability between different operators' NMEs.

It is to be understood that the present invention is not limited to the aforementioned embodiments.

It is to be understood that the methods and the elements according to the invention are not limited to any implementation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

There are numerous ways of implementing functions of the method MTH by means of items of hardware or software, or both, provided that a single item of hardware or software can carry out several functions. It does not exclude that an assembly of items of hardware or software or both carry out a function.

Said hardware or software items can be implemented in several manners, such as by means of wired electronic circuits or by means of a computer program product that is suitable programmed respectively. One or a plurality of computer program products can be contained in a computer or in the different equipments EQ of the multi-domain network system, said equipment comprising a unit control UC, said unit control being hardware or software items as above stated.

The computer program products comprise a set of instructions.

Thus, said set of instructions contained, for example, in a computer programming memory or in an equipment memory, may cause the computer or the equipment EQ to carry out the different steps of the method MTH.

The set of instructions may be loaded into the programming memory by reading a data carrier such as, for example, a disk. A service provider can also make the set of instructions available via a communication network such as, for example, the Internet.

Hence, some embodiments of the invention may comprise one or a plurality of the following advantages:
- it permits to dynamically configure VPNs and reconfigure them when a virtual machine is moving ;
- it permits to coordinate the datacenters resources with the operators resources, i.e., the physical IT resources with the network resources ;
- it permits to automate the provisioning of a VPN according to cloud computing needs and to dynamically reconfigure it to be reliable to VM mobility ;
- it permits to provide a configuration and reconfiguration of a VPN for a customer within a plurality of datacenters distributed over the world, said datacenters being owned by one or a plurality of operators ;
- it permits to sell some Cloud Computing IT resources jointly with network QoS guarantees which might be required when real-time interactions are demanded (like between end-users and VMs) ;
- it permits to propose to create a VPN according to the available VMs on the datacenters ;
- it permits to guaranty the availability and reliability of the IT and network resources ;
- it permits to have an inter-domain VPN (i.e. crossing several networks potentially administrated by different operators), so to cover multi-site customers or multi-site datacenters ;
- it is compliant with various existing management systems either Cloud or Network ones and demands only minor evolutions

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. Method (MTH) for managing network resources (RR) according to physical IT resources' exploitation (VM) within a plurality of datacenters (DC), said method comprising setting up network resources, said setting up comprising :
- receiving by a second equipment (EQ2) a first request (DEMAND1) coming from a first equipment (EQ1), said first request (DEMAND1) comprising a number of physical IT resources allocation (VM) for a plurality of customer edges (CE) ;
- sending from said second equipment (EQ2) a first response (RESP1) to said first equipment (EQ1) with a first part of physical IT resources allocated (VM1-VM4) ;
- sending from said second equipment (EQ2) a second request (DEMAND2) to a datacenter (DC2) for additional physical IT resource(s) (VM5-VM8) until said second request (DEMAND2) is satisfied ;
- sending to a first domain (D1) of the first equipment (EQ1) a set message (SET) comprising a first set of primitives (PM1) for said virtual private network (VPN) to set up a virtual private network (VPN)
- setting up a service level agreement (SLA) between said first domain (D1) and at least a second domain (D2) according to said primitives (PM) ;
- identifying network resources that will support the virtual private network (VPN) and setting up an explicit route object (ERO) ;
- activating the additional physical IT resource(s) (VM5-VM8) and reserving path according to said explicit route object set up (ERO) ; and
- confirming the establishment of the virtual private network (VPN) to the first equipment (EQ1).

2. A method (MTH) according to claim 1, wherein said first equipment (EQ1) is:
- a customer edge (CE1);
- a cloud computing manager (CCM) ; or
- an operations support system (OSS).

3. A method (MTH) according to claim 1 or claim 2, wherein said second equipment (EQ2) is a cloud computing manager (CCM).

4. A method (MTH) according to any one of the previous claims, wherein the set message (SET) is sent to an equipment (EQa) of the first domain (D1) which is :
- an operations support system (OSS) ;
- a network management system (NMS) ;
- a patch computation element (PCE).

5. A method (MTH) according to any one of the previous claims, wherein the first set of primitives (PM1) comprises :
- a destination identifier (IP_ADDd) of customer edges (CE) ;
- a given bandwidth (BWD1) ;
- a source identifier (IP_ADDs) of customer edges (CE).

6. A method (MTH) according to any one of the previous claims, wherein the first set of primitives (PM1) further comprises :
- a quality of service (QoS) ;
- a bidirectional mode between the customer edges (CE).

7. A method (MTH) according to any one of the previous claims, wherein it further comprises updating said network resources (RR), said updating comprising:
- receiving by a fourth equipment (EQ4) from a third equipment (EQ3) a moving request (MOVE) for updating a physical IT resource (VM) ;
- relaying a corresponding update request (UPDATE) to the domain (D) of another equipment (EQb) known by the third equipment (EQ3) until it is satisfied, said update request (UPDATEUPDATE) comprising a request for an additional physical IT resource (VM) ;
- identifying new network resources that will support the virtual private network (VPN) and setting up an explicit route object (ERO) for said additional physical IT resource (VM5) ;
- activating the additional resource and reserving path according to said explicit route object set up (ERO) ;
- confirming the establishment of the virtual private network (VPN) to the third equipment (EQ3) ;
- releasing the additional physical IT resource (VM).

8. A method (MTH) according to the previous claim 7, wherein, the moving request (MOVE) is received after :
- said additional physical IT resource (VM) has been moved from one equipment to another one equipment ; or
- the third equipment (EQ3) has asked for an increase of the bandwidth or an update of a quality of service (QoS).

9. A method (MTH) according to any one of the previous claim 7 or claim 8, wherein the update request (UPDATE) comprises a second set of primitives (PM2) comprising:
- a virtual private network identification (VPN_ID) ;
- a given bandwidth (BWD2) ;
- a set of destination identifiers of customer edges (CE) ;
- a set of source identifiers of customer edges (CE).

10. A method (MTH) according to any one of the previous claims 7 to 9, wherein it further comprises a service level agreement renegotiation between the domain (D2) of the third equipment (EQ3) and the domain (D) of the another equipment (EOb).

11. A method (MTH) according to any one of the previous claims, wherein the path reservation is performed according to RSVP or LDP protocols.

12. A multi-domain network system (NTW) for set up network resources (RR) according to physical IT resources' exploitation (VM) within a plurality of data centers (DC), said network system being adapted to set up network resources and comprising :
- a first equipment (EQ1) adapted to :
- send a first request (DEMAND1), said request comprising a number of physical IT resources allocation (VM1-VM8) for a plurality of customer edges (CE) ;
- receive a first response (RESP1) with a first part of physical IT resources allocated (VM1-VM4) ;
- said second equipment (EQ2) adapted to :
- receive a first request (DEMAND1), said request comprising a number of physical IT resources allocation (VM1-VM8) for a plurality of customer edges (CE) ;
- send a first response (RESP1) to said first equipment (EQ1) with a first part of physical IT resources allocated (VM1-VM4) ;
- send a second request (DEMAND2) to a datacenter (DC2) for additional physical IT resource(s) (VM5-VM8) until said second request (DEMAND2) is satisfied ;
- send a set message (SET) to a first domain (D1) of the first equipment (EQ1) to set up a virtual private network (VPN), said set message (SET) comprising a first set of primitives (PM1) for said virtual private network (VPN) ;
- said first domain (D1) adapted to :
- set up a service level agreement (SLA) between said first domain (D1) and at least one second domain (D2) according to said first set of primitives (PM1) ;
- identify network resources that will support the virtual private network (VPN) and set up an explicit route object (ERO) ;
- activate the additional physical resource(s) (VM5-VM8) and reserve path according to said explicit route object set up (ERO) ; and
- confirm the establishment of the virtual private network (VPN) to the first equipment (EQ1) ;
- said datacenter (DC2) adapted to receive said second request (DEMAND2) for additional physical IT resource(s) (VM5-VM8) ;
- said at least one second domain (D2).

13. A multi-domain network system (NTW) according to the previous claim 12, said multi-domain network system being further adapted to update network resources and comprising :
- a third equipment (EQ3) adapted to:
- send a moving request (MOVE) for updating a physical IT resource (VM) ;
- relay a corresponding update request (UPDATE) to the domain (D1) of another equipment (EQb) known by the third equipment (EQ3) until it is satisfied, said update request (UPDATE) comprising a request for an additional physical IT resource (VM) ;
- a fourth equipment (EQ4) adapted to:
- receive said moving request (MOVE) for updating a physical IT resource (VM) ;
- an equipment (EQb) of the domain (D1) which has received the set message (SET) adapted to:
- receive said corresponding update request (UPDATE) ;
- identify network resources that will support the virtual private network (VPN) and set up an explicit route object (ERO) for said additional physical IT resource (VM) ;
- activate the additional resource and reserve path according to said explicit route object set up (ERO) ;
- confirm the establishment of the virtual private network (VPN) to the first equipment (EQ1) ; and
- release the additional physical IT resource (VM).

14. A first equipment (EQ1) of a multi-domain network system (NTW) for performing the method according to any one of the claims 1 to 11, said first equipment (EQ1) comprising a first processor (PR1) adapted to :
- send a first request (DEMAND1), said request comprising a number of physical IT resources allocation (VM1-VM8) for a plurality of customer edges (CE) ;
- receive a first response (RESP1) with a first part of physical IT resources allocated (VM1-VM4).

15. A first domain (D1) of a multi-domain network system (NTW) for performing the method according to any one of the claims 1 to 11, said first domain (D1) comprising a second processor (PR2) adapted to :
- set up a service level agreement (SLA) between said first domain (D1) and at least one second domain (D2) according to said first set of primitives (PM1) ;
- identify network resources that will support the virtual private network (VPN) and set up an explicit route object (ERO) ;
- activate the additional physical IT resource(s) (VM5-VM8) and reserve path according to said explicit route object set up (ERO) ; and
- confirm the establishment of the virtual private network (VPN) to the first equipment (EQ1).

16. A second equipment (EQ2) of a multi-domain network system (NTW) for performing the method according to any one of the claims 1 to 11, said second equipment (EQ2) comprising a third processor (PR3) adapted to
- receive a first request (DEMAND1), said request comprising a number of physical IT resources allocation (VM1-VM8) for a plurality of customer edges (CE) ;
- send a first response (RESP1) to said first equipment (EQ1) with a first part of physical IT resources allocated (VM1-VM4) ;
- send a second request (DEMAND2) to a datacenter (DC2) for additional physical IT resource(s) (VM5-VM8) until said second request (DEMAND2) is satisfied ;
- send a set message (SET) to a first domain (D1) of the first equipment (EQ1) to set up a virtual private network (VPN), said set message (SET) comprising a first set of primitives (PM1) for said virtual private network (VPN).

17. A third equipment (EQ3) of a multi-domain network system (NTW) for performing the method according to any one of the claims 1 to 11, said third equipment (EQ3) comprising a fourth processor (PR4) adapted to :
- send a moving request (MOVE) for updating a physical IT resource (VM) ;
- relay a corresponding update request (UPDATE) to the domain (D1) of another equipment (EQb) known by the third equipment (EQ3) until it is satisfied, said update request (UPDATE) comprising a request for an additional physical IT resource (VM).

18. A fourth equipment (EQ4) of a multi-domain network system (NTW) for performing the method according to any one of the claims 1 to 11, said fourth equipment (EQ4) comprising a fifth processor (PR5) adapted to receive said moving request (MOVE) for updating a physical IT resource (VM).

19. An equipment (EQb) of the domain (D1) which has received the set message (SET) and of a multi-domain network system (NTW) for performing the method according to any one of the claims 1 to 11, said equipment (EQb) comprising a sixth processor (PR6) adapted to:
- receive said corresponding update request (UPDATE) ;
- identify network resources that will support the virtual private network (VPN) and set up an explicit route object (ERO) for said additional physical IT resource (VM) ;
- activate the additional resource and reserve path according to said explicit route object set up (ERO) ;
- confirm the establishment of the virtual private network (VPN) to the first equipment (EQ1) ; and
- release the additional physical IT resource (VM).
